# EUROPEAN PATENT APPLICATION

(11) **EP 0 539 641 A1**
(43) Date of publication of application: **05.05.1993**
(21) Application number: 91480167.5
(22) Date of filing: 31.10.1991
(51) Int. Cl.: G06F 15/60

(54) **A design method for the automatic implementation of data-flow partitions in asic's**

(71) Applicant: International Business Machines Corporation, Armonk, N.Y. 10504 (US)
(72) Inventor: Lampin, Patrick, F-77300 Fontainebleau (FR); Moitie, Richard, F-77930 Fleury-en-Bière (FR); Vassoux, Jean-Paul, F-91210 Draveil (FR); Waymel, Bernard, F-77310 St Fargeau Ponthierry (FR)
(74) Representative: Klein, Daniel Jacques Henri

(57) **Abstract**

A design method for the automatic implementation of data-flow partitions in integrated circuit chips, typically ASIC's, which takes advantage of the bit-stack features to reach better density and performance. The method is structured from the logical design to the physical design. The logical design of the chip comprises the following main steps :
- a logic entry step (S1) to capture with a high level language the design of the chip making use of logical macrofunction library to describe data-flow and control logic partitions in a high level logic (D1); and,
- a structure extraction step (S3) to perform the expansion of the high level logic (D1) in a book level logic (D5) and to generate the hierarchy description (D6), the sorted netlist (D7), and R/C estimates (D8);

The physical design of the chip comprises the following main steps :
- power assignment (S7), timing analysis (S8), floor planning (S9), placement (S10) and wiring (S11) steps that make use of the data generated during the previous steps to ensure an optimal placement and wiring of the books; and,
- a mask data generation step (S13) that generates data (D14), from which mask patterns can be produced onto the integrated circuit chips.

## Description

The present invention relates to the manufacturing of VLSI semiconductor integrated circuit chips, and more particularly to an effective design method for the automatic implementation of data-flow partitions in VLSI ASICs (Application Specific Integrated Circuits), e.g. microprocessors. When combined with standard hardware/software tools, the method of the present invention can be advantageously included in an enlarged fully automated design system which generates mask data from which mask patterns can be produced onto the chip, in the course of manufacturing thereof. To facilitate the reader's understanding, a glossary of the key technical words employed in the present patent application is given in the description.

Two different conventional basic approaches of design systems to built integrated circuits in silicon chips are known to date: full custom design systems and direct release design systems.

To implement data-flow partitions, the full custom design systems use sophisticated tools, custom designed physical macrofunctions and require a lot of manual operations. Logic designers assemble these macrofunctions to make complex logic circuit architecture. Then, sophisticated software tools place and wire these macrofunctions in the chip in order to achieve the shortest possible connections.

Unfortunately, these macrofunctions have no built-in flexibility and are application and technology dependent. For instance, for any new user requirements on the number of bits, a new macrofunction must be designed with all its physical, logical and electrical models. In addition, the high density and performance that are obtained from full custom design systems require very skilled resources (people/tools) at all the different stages of the process. Further, the results of a given application are more or less not applicable to others applications. This limitation is due to the application dependent concept at the base of the full custom design approach and to the amount of manual operations involved in the process.

These limitations and drawbacks are partially eliminated by the direct release design systems which utilize a large variety of pre-designed (standard cells) and pre-characterized (gate arrays) circuit elements, from relatively simple logic books (e.g. a 3 ways NAND circuit) to much more complex books (e.g. arrays), that software tools select, place and interconnect on the chip. Globally, this approach is presently considered with considerable interest because it appears to offer the best performance/cost ratio.

A detailed description of a typical direct release design system is described in the article entitled "A 300K-Circuit ASIC Logic Family CAD system", p. 10.4.1 to p. 10.4.5, published in the proceedings of the IEEE 1990 Custom Integrated Circuits Conference. This computer-aided-design (CAD) system has been developed to design CMOS ASICs logic family chips denser than any previously available. High level languages are used for design capture and functional simulation, followed by automatic logic synthesis and macro generation. Accurate delay calculation/timing analysis is available at each stage of the design; delays are also used both for delay simulation and testing. Timing guidance is provided to the physical design through use of capacitance targets and estimates. Physical design algorithm supports hierarchy to increase density. An audit/release mechanism guarantees correct-by-construction design. The interface to the silicon foundry contains mask generation data and test pattern data.

Despite its significant advantages, the above direct release design system does not provide a complete and structured solution to effectively implement data-flow partitions, from the logical design to the physical design, because the design method does not distinguish data-flow from control logic partitions. Because the data-flow specificities are not considered as such, a multiple physical terrain approach is not possible thereby preventing an automatic data-flow implementation compatible with control logic. As a result, because the data-flow partitions are handled as control logic partitions, the disclosed design method of the prior art does not take advantage of their typical regular structure.

It is therefore a primary object of the invention to provide a design method for the automatic implementation of data-flow partitions in ASIC's that is fully compatible with an implementation using standard cells or gate arrays.

It is another object of the present invention to provide a design method that is structured from the beginning of the logical design to the termination of the physical design and where the initial logic design hierarchy is directly transferred to the physical design tools, then exploited therein.

It is another object of the present invention to provide a design method that allows a growable logical macrofunction library to be built from elementary elements as those found is a standard cell library.

It is another object of the present invention to provide a design method that has multiple physical terrain capabilities, i.e. comprising a dynamic allocation of power busses, a selective placement of the books and an adapted wiring of the books.

It is still another object of the present invention to provide a design method that has high flexibility and is application independent and quasi technology independent while retaining the full custom design system advantages.

By solving most of the problems of the above mentioned conventional design systems while globally retaining their specific advantages, the present invention provides a design method that is basically derived from the direct release design approach and can be included in a fully automated design system of generating mask data. The method of the present invention permits to automatically implement data-flow partitions in ASIC's, typically microprocessors comprising an n-bit wide data-flow path. In addition to microprocessors (µPs), digital signal processors (DSP's) and microcontrollers (µCs) are the preferred applications.

Briefly summarized, the present method includes first the logical design of the chip and comprises the following novel steps :
- a high level design of the chip making use of growable logical macrofunction library to describe dataflow and control logic partitions; and,
- a structure extraction step comprising an expansion of the macrofunction level description in a book level logic and a generation of the pertinent physical data.

The method further includes the physical design of the chip comprising the following main steps :
- floor planning, placement and wiring steps making use of the physical data generated during the previous extraction step to generate optimal placement and wiring data; and,
- a mask data generation step making use of said optimal placement/wiring data from which mask patterns can be produced onto the silicon chips.

If compared to the above mentioned conventional methods the proposed method has several advantages :
- with respect to the direct release design approach: denser chips with better performance predictions and better performances to satisfy the increasing demand of the highly competitive computing industry.
- with respect to the full custom design approach: more flexibility which finally result in better productivity to the users, because all the manual steps of this approach are eliminated.

The novel features believed to be characteristic of this invention are set forth in the appended claims. The invention itself, however, as well as other objects and advantages thereof, may best be understood by reference to the following detailed description of an illustrated preferred embodiment to be read in conjunction with the accompanying drawings.

In the drawings :
Fig. 1 is a flow chart of the design method for the automatic implementation of data-flow partitions in ASIC's according to the present invention illustrating the step sequence.
Figs. 2A and 2B are respectively the representation of the result of the placement and wiring steps performed on a typical application e.g. a multiplier/adder, according to a conventional direct release design method.
Figs. 3A and 3B are respectively the representation of the result of the placement and wiring steps performed on the same multiplier/adder according to the design method of the present invention.

The definitions of the specific technical vocabulary used in the description of the present invention are given in the glossary below.

Partitions : they are collections of objects (such as standard cell or gate array books) to be handled as a whole. They can be either logical partitions e.g. data-flow partitions, control logic partitions arrays, or physical partitions: e.g. bit stacks, random clusters, arrays.

Data-flow logic : a data-flow partition is the part of logic where the same kind of data are parallely and identically processed. ASIC's include one or several multi-bit data-flow partitions. Besides their specific functions, data-flow partitions differ in their number of bits.

Control logic : in contrast with the data-flow partitions, the control logic, does not show regular structures. Its purpose is to drive all the macrofunctions contained in the bit-stacks. The control logic is built from elementary blocks, such as "AND", "OR", "XOR"... Because of its irregular aspect, the random logic requires control placement and wiring techniques. The physical implementation is therefore referred to as random clusters.

Bit-stacks : they are the physical implementation of a logical data-flow partition. They are made from macrofunctions. Those macrofunctions contain the same number of bits. They are arranged so that each bit within the block is identical, having been formed by a group of basic semiconductor devices which have been interconnected to form a one bit function. The bits are placed physically adjacent and extend in one direction d1 of the chip. The macrofunctions are placed into bit-stacks in which corresponding bits of different blocks are in alignment in a direction d2 perpendicular to the direction d1.

Macrofunctions (Words) : they are the standard functions used to design the data-flow partitions. Each logical macrofunction performs a basic function such as : register storage function, switching multiplexor function, arithmetic and logic unit function. Macrofunctions are made from elementary functions called books, which in turn, may be considered as elements of a library.

Books : they are the elementary functions contained in a pre-designed library, e.g. a standard cell library or gate array library. They have specific requirements. To improve the density and wiring of macrofunctions, books are arranged by pairs and classified in two different sets of books : control books and data flow books. In addition, the connecting input/output terminals are placed on the same wiring track, so that control signals may be wired on a given single track along a first direction referred to below as the d1 direction, thereby reducing the wiring track demand and limiting the wiring connections at their minimal length. By extension, arrays (RAM, ROM,...) are considered as complex books.

Control books : they may or not have any logic function, but they are always used to buffer control signals coming from the control logic. Control books seldomly include more powerful logical functions such as an encoding function.

Data-flow books : they vary from the simple inverter to complex full adder or latches. They are usually one cell high to comply to the bit-stack requirements, when input bits have an identical logical weight. When input bits have different logical weight, data-flow books are built with an adapted form factor. Data-flow books can also be elements of standard cell as well as gate array libraries.

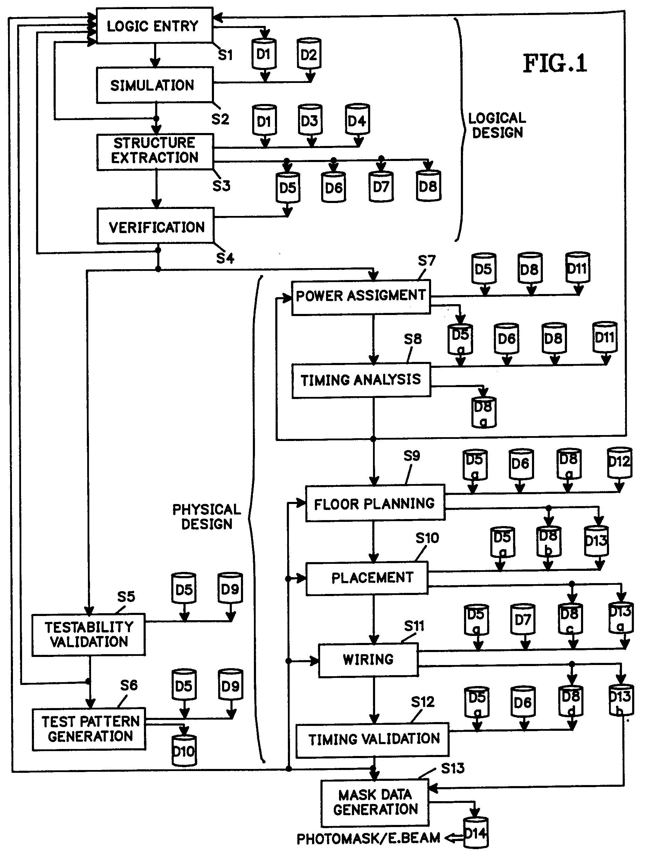

Fig. 1, is a flow chart illustrating the different steps of the design method of the present invention, which makes apparent the classical distinction between the logical design and the physical design phases.

The logical design of the chip is basically made up by the four following steps : the logic entry step S1, the high level logic simulation step S2, the structure extraction step S3 and the verification step S4.

The logic entry step S1 basically consists in capturing the design described in a high level language. First, the data-flow logic is captured, that means assembling the macrofunctions or words needed to perform the data-flow functions of the subject application, e.g. the multi-bit data-flow path of a microprocessor. Then, the control logic is captured in the chosen entry language, making use of the high level capability of the language presently used if necessary. As a result, the high level logic D1 which is generated at this step, represents the description of the word level logic of the data-flow and control logic partitions. It further includes hierarchy data. For sake of simplicity, the description will be more particularly directed to the implementation of the data-flow partition, but it may be understood that the present design method also implements control logic partitions as well. Note that hereafter, all data files that are generated or used during the various steps of the present design method are designated by capital letter D followed by an identification number. When a preexisting data file is updated or modified in a specific step, the new data file that is generated therefrom bears the same designation, but a lower-case letter is added thereto in sequence.

The second step S2 consists of a high level logic simulation. It uses the high level logic D1 generated by the logic entry step S1 and word model data D2 that represent the logic behaviour of the macrofunctions, to simulate at high level the behaviour of the application. If the results are different from those expected, the high level logic D1 is updated to obtain the functions required by the application by re-starting the whole process of steps S1 and S2 from the beginning.

During the structure extraction step S3, the pertinent physical data are extracted from the macrofunction level description as explained below. The data needed to perform this step are the high level logic D1 generated by the logic entry step S1, the word map D3 that describes the physical placement of the books within the macrofunctions and the logic models of the books D4. As a result of step S3, the design described in a high-level language is expanded to a book level logic D5, and physical data are generated. These physical data will be subsequently used to force the placement and wiring of the elementary functions in order to respect the regular structure of the data-flow logic. These physical data are listed below. The partitions in the original design hierarchy which the designer wishes to preserve during the physical design are thus recorded in a hierarchy description D6 which describes the relative placement of the basic entities within each macrofunction and will be used later to reconstruct the design hierarchy. The sorted netlist D7 describes the connections between the basic elements. The purpose of this netlist is to drive the three step routing process to ensure an optimal wiring. Finally, the R/C estimates D8 contain load resistance and capacitance estimates obtained by anticipating the potential critical paths.

Next, the book level logic verification S4 is performed to ensure that the book level logic D5 is consistent with the high level logic D1 thanks to statical and boolean analysis comparison.If not consistent, then the logic models of the books D4 must be reconsidered.

This terminates the logical design phase. Then, the two following sequences of steps can be processed simultaneously as illustrated by the two branches shown in Fig. 1.

In the left branch, the sequence comprises the testability validation step referenced S5 and the test pattern generation step referenced S6. It begins with the testability validation step S5 which consists in making sure of the correct application of logic writing rules during the logic design and the possibility of testing the application. The data pertinent at this stage of the process are book level logic D5 generated during the structure extraction step S3 and book test models D9. If the rules are violated, the high level logic D1 is updated by re-starting the whole process of steps S1 to S4, otherwise, the step of test pattern generation S6 is performed.

Step 6 is based on the book level logic D5 and book test models D9. At the end of step S6, test pattern data D10 are generated to be subsequently used during the manufacture of the chip for test purposes.

On the right branch, the second sequence makes up the physical design part of the method, and comprises the following steps : the power assignment step S7, the timing analysis step S8, the floor planning step S9, the placement step S10, the wiring step S11, the timing validation step S12 and the mask data generation step S13.

The physical design begins with the power assignment step S7 which consists in setting up the correct level of power for the books contained in the book level logic D5 generated during the structure extraction step S3. This assignment is based on the R/C estimates D8 and the book delay rules D11 (i.e. timing equations that describe the delays of the books).

The book level logic D5 once updated after the power assignment step S7 is now referenced D5a.

Next step of the method is the timing analysis step S8. In addition to the book level logic data D5a, this step also requires the book delay rules D11, the hierarchy description D6 (optional) and the R/C estimates D8. The main purpose of this step S8 is to update the R/C estimates D8 in order to derive timing targets therefrom. The updated timing targets data are referenced D8a. If the delays calculated lead to unacceptable timing constraints, two possibilities are offered :
- re-performing the power assignment step S7 to correct the power of some books;
- re-starting the whole process from the beginning (at step S1) because the design capture was not satisfactory. However, this appears to be very unlikely with the present design method.

The floor planning step S9 consists in defining an optimized chip floor planning by evaluating for each data-flow partition and, the corresponding shape, the relative placement inside the chip, the porosity and the wirability. As a matter of fact, unlike other partitions, data-flow partitions need to be placed during floor planning step S9 because word placement influences drastically the overall wirability of the chip and power busses image may have to be modified for electric current purposes. The data needed to perform this step are the book level logic D5a updated after the power assignment step S7, the hierarchy description D6 generated by the structure extraction step S3, the timing targets data D8a generated by the timing analysis step S8 and book physical model data D12, which describe the physical characteristics of the books. New timing targets data D8b and placement control oriented physical data D13 are generated at the end of this step.

During the placement step S10, all the remaining partitions are placed except the bit-stack partitions which are already placed. This step requires : the book level logic data D5a updated by the power assignment step S7, the timing targets D8b updated during the floor planning step S8 and the placement control oriented physical data D13 generated by the floor planning step S9. Wiring oriented physical data D13a and new timing targets D8c are generated during this step S10.

The wiring step S11 uses the book level logic D5a updated by the power assignment step S7, the sorted netlist D7 generated by the structure extraction step S3, the wiring oriented physical data D13a and the new timing targets D8c generated by the previous placement step S10. The bit-stacks are wired up first, with a three pass process which reads in sequence as follows :
- first pass : control lines routing along direction d1, i.e. connecting aligned control book outputs with data-flow book inputs;
- second pass : intra-words routing along direction d1 and direction d2 orthogonal therewith, i.e. wiring the books within each macrofunction;
- third pass : inter-words routing along direction d2, i.e. connecting the macrofunctions together.

For each wiring pass, the wiring tool (router), is customized according to the nature of the nets, to reach the best possible physical wiring, i.e. the shortest nets and minimum wire jogs. At the end of step S11, an exhaustive set of physical data D13b which include placement/wiring data and the real timings data D8d are available.

The next step of the present method is the timing validation step S12. It needs the book level logic D5a updated by the power assignment step S7, the hierarchy description D6 generated by the structure extraction step S3 and the real timing data D8d generated during the wiring step S11. The purpose of this final timing validation is to make sure that the real timing data after physical design correspond to the timing targets. If they do not, it is necessary to go backward in the process to update the proper data to reach the expected results after the timing validation. The steps where a reiteration may be necessary in that respect are in sequence: the wiring step S11, the placement step S10, the floor planning step S9 and finally the logic entry step S1 (this last case is never due to a data-flow partition). If the results correspond to the timing targets, the final step is then performed.

The final step is the mask data generation step S13 which uses the physical data D13b generated by the wiring step S11. During step S13, the mask data are generated and validated. Mask data D14 are usable either for the manufacture of photomasks in a pattern generator or to directly create mask patterns onto the chip in an E. Beam lithography equipment.

It has been found that, when the application to be embodied on the chip involves a high proportion of multi-bit data-flow partitions, such as it is normally encountered in certain parts of data processing systems, the approach of the present invention produces an efficient layout of circuits. As a matter of fact, the proposed structured design method of the present invention allows that the population rate, which corresponds to the amount of silicon area actually used on the chip, reaches 100%, because it takes fully benefit of the regular physical structure of the data-flow. Macrofunction connections are kept minimal, while maintaining all equivalent logical nets at the same length, and all equivalent functions being connected by straight parallel wires. In particular, according to the present design method, during the floor planning step S9, a dynamic allocation of power busses increases the density of the bit-stack and improves porosity, by eliminating all possible gaps between power busses and macrofunctions which would normally result from a fix power supply grid scheme.

Other advantages of the present method directly result from the fact that logical macrofunctions are used to design data-flow partitions instead of physical macrofunctions, finally resulting in much more flexibility. Logical macrofunctions are extendable to any bit-stack width, because they are made from pre-qualified books, which are easily and quickly designed and coded. In addition, theirs characteristics can be defined as soon as the logical design is complete since all primitives are already designed. Finally, qualification cycle is reduced since there is no physical design to perform at the device level.

Quantified improvements that result from the use of the present design method by comparison with the conventional direct release method described in the article cited above, are given below. They are based on average chip designs (the more regular and wide data-flow structures in the chip, the more gain) :
- a performance improvement varying from 15 % to 40 % measured on typical critical paths (a typical critical path includes random logic as well as data-flow) as a direct result of step S11; and,
- a density improvement varying from 50% to 100% on full data-flow partitions (the total density gain over conventional random logic design depends on several factors such as the proportion of the data-flow partitions over the entire chip or the size of the chip).

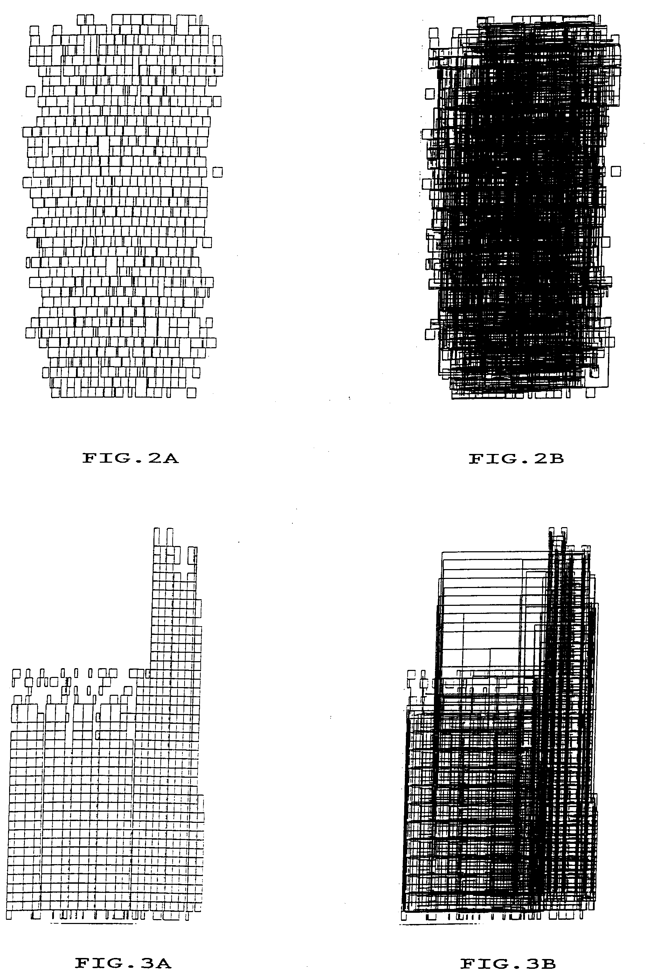

Figs. 2A and 2B respectively show the result of the placement and wiring steps performed on multiplier/adder partitions using a conventional direct release design method.

For sake of comparison, Figs. 3A and 3B respectively show the result of the placement wiring steps performed on the same multiplier/adder partition according to the method of the present invention.

Fig. 2B shows a complex irregular and bushy structure with almost no porosity left. On the contrary, as illustrated by Fig. 3B, there is shown a regular clean structure with straight, parallel wires and substantial porosity left in both directions d1 and d2.

In particular, Fig. 3A illustrates when compared to Fig. 2A, the quantified above-mentioned improvements, which results from the alignment of books.

## Claims

1. A design method for the automatic implementation of data-flow partitions in semiconductor integrated circuit chips characterized in that it comprises:
- a logic entry step (S1) to capture with a high level language the design of the chip, making use of the logical macrofunction library to describe data-flow and control logic partitions in a high level logic (D1);
- a high level logic simulation step (S2) using word model data (D2) that represent the logic behaviour of the macrofunctions to simulate at high level the behaviour of said high level logic (D1);
- a structure extraction step (S3) to extract the pertinent physical data from said high level logic (D1) using the word map D3 that describes the physical placement of the books within the macrofunctions and the logic models of the books D4 to generate a book level logic (D5), the hierarchy description (D6) which describes the relative placement within each macrofunction the sorted netlist (D7) which describes the connections between the basic elements, and the R/C estimates (D8) which contain load resistance and capacitance estimates;
- a book level logic verification step (S4) to make sure that the book level logic (D5) is consistent with said high level logic (D1);
- a power assignment step (S7) using said book level logic (D5), the R/C estimates (D8), and the book delay rules (D11), to set up the correct level of power of the books contained in said book level logic (D5) to generate updated data (D5a);
- a timing analysis step (S8) based on said updated book level logic (D5a), hierarchy description (D6), R/C estimates (D8), book delay rules (D11) to derive updated timing targets therefrom (D8a);
- a floor planning step (S9) based on updated book level logic (D5a), hierarchy description (D6), updated timing targets (D8a), and book physical models (D12) to evaluate the relative placement and shape of the bit-stacks and random clusters, to update timing targets (D8b), and to generate placement control oriented physical data (D13);
- a placement step (S10) based on updated book level logic (D5a), and updated timing targets ( D8b), and placement control oriented physical data (D13) generated at previous step (S9) to achieve the placement of the partitions which are not already placed and generate wiring oriented physical data (D13a), and updated timing targets (D8c);
- a wiring step (S11) based on updated book level logic (D5a), the sorted netlist (D7), wiring oriented physical data (D13a), updated timing targets (D8b) to ensure an optimal wiring of said partitions and generate updated timing targets (D8c) and physical data (D13a);
- a timing validation step (S12) based on updated timing targets (D8c), updated book level logic (D5a), hierarchy description (D6) to make sure that real timings data (D8d) correspond to the initial timing targets R/C estimates; and,
- a mask data generation step (S13) using said physical data (D13b) to produce mask data (D14) usable in the manufacturing of integrated circuit chips.

2. The method of claim 1 characterized in that standard cells or gate arrays are used to implement the control logic partition.

3. The method of claim 1 or 2 characterized in that it further includes the steps of generating test patterns.

4. The method of claim 3 wherein said step of generating test patterns comprises:
- a testability validation step (S5); and,
- a test pattern generation step (S6).

5. The method of any above claim characterized in that said logical macrofunctions are made from pre-qualified books.

6. The method of any above claim characterized in that all possible gaps between power busses and said macrofunctions are eliminated thanks to a dynamic allocation of said power busses.

7. The method of any above claim characterized in that said wiring step (S11) includes the wiring of the bit-stacks, made up of three passes, which are a control lines routing first, an intra-words routing second and an inter-words routing third, that provide an optimal wiring and can be fully automated.

8. The method of any above claim characterized in that it further includes the step of directly forming mask patterns onto said semiconductor integrated circuit chips by E. Beam lithography using said mask data (D14).

9. The method of any above claim 1 to 7 characterized in that it further includes the step of manufacturing a photomask in using said mask data (D14) in a pattern generator.
